# EUROPÄISCHE PATENTANMELDUNG

(11) **EP 4 635 697 A1**
(43) Veröffentlichungstag der Anmeldung: **22.10.2025**
(21) Anmeldenummer: 25170017.5
(22) Anmeldetag: 11.04.2025
(51) Int. Cl.: B29B 7/42, B29C 48/51, B29C 48/66

(54) **EXTRUSIONSVORRICHTUNG ZUM TRENNEN EINES KUNSTSTOFFVERBUNDS MIT UNTERSCHIEDLICH AUFSCHMELZENDEN THERMOPLASTISCHEN KUNSTSTOFFEN UND VERFAHREN DAFÜR**

(30) Priorität: 17.04.2024 DE 102024110725
(71) Anmelder: Universität Paderborn Körperschaft des öffentlichen Rechts, 33098 Paderborn Nordrhein-Westfalen (DE)
(72) Erfinder: Petzke, Jonas, 33098 Paderborn (DE); Brüning, Florian, 33129 Delbrück (DE); Schöppner, Volker, 33415 Verl (DE)
(74) Vertreter: Tarvenkorn, Oliver

(57) **Zusammenfassung**

Eine Extrusionsvorrichtung (100) zum Trennen eines Kunststoffverbunds mit zwei unterschiedlich aufschmelzenden thermoplastischen Kunststoffen, besitzt eine drehangetriebene Extrusionsschnecke (10), die in einem Extrudergehäuse (20) gelagert ist. Die Schneckenwelle (11) besitzt einen Hauptschneckensteg (12), durch den ein Kanal (13) zur Förderung des thermoplastischen Kunststoffs gebildet ist. Durch wenigstens einen Barriereschneckensteg (14) in einer Separationszone (15) ist ein von flüssiger Kunststoffschmelze durch- und/oder überströmbares Barriereelement ausgebildet, das den Kanal (13) in einen Feststoffkanal (13.1) und einen Schmelzekanal (13.2) unterteilt. Die Schneckenwelle (11) weist außerdem einen mit dem Schmelzekanal (13.2) verbundenen Schmelzeaustragskanal (17) auf, der sich von wenigstens einer Einzugsöffnung (18) in der Separationszone (15) bis zu einer Mündung (19) im Zentrum einer Schneckenspitze (16) erstreckt. Im Extrudergehäuse (20) ist eine mit dem Schmelzeaustragskanal (17) in Fließverbindung stehende Ausschleusöffnung (41) vorgesehen. Außerdem ist ein feststehendes Pinolenwerkzeug (30) vorgesehen ist, das einen zur Schneckenspitze (16) führenden Schmelzeaustragskanal (32) aufweist, der mit dem Schmelzeaustragskanal (17) der Schneckenwelle (11) fluchtet. Zwischen dem Pinolenwerkzeug (30) und einem Pinolengehäuse (40) ist ein Ringkanal (33) ausgebildet ist, der über einen Austragskanal (41) mit der Außenseite verbunden ist.

## Beschreibung

Die Erfindung betrifft eine Extrusionsvorrichtung zum Trennen eines Kunststoffverbunds mit wenigstens zwei unterschiedlich aufschmelzenden thermoplastischen Kunststoffen mit den Merkmalen des Oberbegriffs des Anspruchs 1 sowie ein Verfahren dafür mit den Merkmalen des Oberbegriffs des Anspruchs 12.

Bei Produkten, die einen Verbund aus unterschiedlichen Kunststoffen enthalten, besteht beim Recycling das Problem, diesen Verbund aufzutrennen und daraus unterschiedliche Stoffströme zu separieren.

Zur Separation von Verbundbauteilen liegen zum aktuellen Stand der Technik mehrere Verfahrensprinzipien vor.

Bei der Schwimm-Sink-Trennung (Dichtesortierung) werden die Komponenten in ein Medium gegeben und über ihre Dichte separiert. Materialien, welche eine geringere Dichte als das Medium aufweisen, steigen auf und werden von Komponenten mit höherer Dichte als das Medium abgeschieden. Das Schwimm-Sink-Verfahren ist immer an ein vorgeschaltetes Verfahren zur Trennung des Verbundes sowie ein weiteres Medium zur Trennung der Komponenten geknüpft. Zudem muss das Material, je nach verwendetem Medium, im Anschluss gereinigt und/ oder getrocknet werden. Das Verfahren hat lediglich eine begrenzte Anwendbarkeit, da die Dichteunterschiede der Komponenten eine signifikante Differenz aufweisen müssen. Somit können Materialmischungen mit ähnlicher Dichte nur schwer voneinander getrennt werden. In den häufigsten Fällen wird Wasser zur Trennung genutzt. Durch Schadstoffe oder Verunreinigungen aus den Materialien kann die Entsorgung des Abwassers Auswirkungen auf die Umwelt haben bzw. erfordert zusätzliche Maßnahmen zur Wasseraufbereitung.

Aus der EP3943270 A1 ist es bekannt, zwischen zwei zu trennende Materialschichten eine Trennschicht einzubringen, welche z. B. einen Schmelzpunkt von unter 100 °C aufweist. Diese Trennschicht wird in heißem Wasser aufgeschmolzen und gelöst, sodass die zu trennenden Komponenten voneinander separiert werden. Diese Verfahren ermöglicht eine nahezu sortenreine Trennung, setzt aber einen begrenzten Temperatureinsatzbereich des mit dem Verbund versehenen Produkts voraus, damit es nicht zu einer ungewollten Ablösung durch Aufweichen der Trennschicht kommt. Zum einen werden die mechanischen Eigenschaften des Verbundes reduziert und zum anderen ist die Verwendung einer Verbundschicht immer an eine Kompatibilität mit den jeweils anderen Komponenten geknüpft. Liegt die Aufschmelztemperatur der Trennschicht unterhalb der Anwendungstemperatur, ist ein Einsatz nicht möglich. Trennschichten schränken den Anwendungsbereich des Materialverbundes also stark ein.

Des Weiteren existieren Lösungsansätze, welche auf die Infrarotspektroskopie zurückgreifen. Da jedes Material ein spezifisches Spektrum an IR-Strahlung absorbiert, kann nach vorangegangener Zerkleinerung somit das jeweilige Material detektiert und von anderen separiert werden. Infrarotspektroskopie-Systeme sind äußerst teuer und bedingen eine umfangreiche Bibliothek, um die einzelnen Komponenten analysieren zu können. Außerdem werden die Messungen durch Verunreinigungen verfälscht, oder zwei Komponenten weisen ein sehr ähnliches Spektrum auf, sodass eine Separation nicht möglich ist. Dies gilt ebenfalls für schwarz eingefärbte Materialien, welche nahezu das gesamte IR-Spektrum absorbieren, so dass eine Messung nicht möglich ist. Zudem ist die IR-Spektroskopie an eine vorausgehende Trennung der Komponenten geknüpft, welche im Anschluss an die Trennung mithilfe der IR-Spektroskopie separiert wird. Problematisch ist, dass der Anteil der Schredderfraktion, der direkt aneinanderhaftende Kunststoffsorten umfasst, durch dieses Verfahren nicht trennbar ist.

Im chemischen Trennverfahren werden Lösungsmittel eingesetzt, um spezifische Materialien zu extrahieren. Die chemischen Verfahren erfordern immer den Einsatz von Chemikalien, wie Lösungsmitteln oder Reagenzien. Dies kann Umweltauswirkungen haben und erfordert eine sichere Handhabung sowie Entsorgung der verwendeten Chemikalien. Zudem sind chemische Trennverfahren häufig an einen hohen Energieverbrauch gekoppelt, sodass hohe Betriebskosten anfallen und die Nachhaltigkeit der Prozesse in Frage gestellt werden muss. Bei sehr ähnlichen chemischen Eigenschaften kann es zudem vorkommen, dass eine präzise Separation der Komponenten schwierig ist.

Mittels Schmelzefiltern kann eine große Bandbreite an Polymeren verarbeitet werden, um alle festförmigen und elastomeren Fremdstoffe wie Papier, Holz, Aluminium, Kupfer, Gummi, Silikone oder auch Hochtemperaturkunststoffe wirkungsvoll zu entfernen. Die Anwendung von Hochleistungsschmelzefiltern ist mit einigen Nachteilen verbunden. Da sich die Feststoffpartikel im Filter sammeln kommt es zu einem erhöhten Druckaufbau und somit zur Verringerung des Durchsatzes. In aktuellen Geräten zur Partikelabscheidung ist die effektive Entfernung von Feststoffpartikeln begrenzt, und lediglich bis zu etwa 16 % der feststoffförmigen Partikel können im kontinuierlichen Betrieb hausgefiltert werden.

Die genannte Erfindung hat die Aufgabe, Materialverbunde aus zwei oder mehr Komponenten voneinander zu separieren und die aufgeschmolzene Komponenten in nahezu reiner Form etwaigen Folgeeinrichtungen, wie z. B. Extrudern oder Spritzgießaggregaten, zur Verfügung zu stellen.

Zur Lösung sieht die Erfindung eine Extrusionsvorrichtung zum Trennen eines Kunststoffverbunds mit unterschiedlich aufschmelzenden thermoplastischen Kunststoffen mit den Merkmalen des Anspruchs 1 sowie ein Verfahren mit den Merkmalen des Anspruchs 12 vor.

Ein Kunststoffverbund, der mindestens zwei Kunststoffe mit unterschiedlichen Schmelzpunkten umfasst, wird zunächst in Partikel mit einer solchen mittleren Partikelgröße zerkleinert, dass sie mit üblichen Extrusionsvorrichtungen gut verarbeitbar sind.

Mit dem Verfahren und der Extrusionsvorrichtung kann grundsätzlich auch ein Verbund aus einem nicht aufschmelzbaren Feststoff und einem aufschmelzbaren thermoplastischen Kunststoff verarbeitetet werden, jedoch ist hierfür eine bekannte Siebvorrichtung wirtschaftlicher einsetzbar, so dass diese Option der Erfindung nachfolgend nicht mehr näher beschrieben wird.

Die Erfindung sieht zur Separation vor, eine Extrusionsschnecke zu verwenden, die in einer Separationszone zusätzlich zu dem üblichen, wendelförmigen Hauptschneckensteg mit einem Barriereschneckensteg versehen ist. Dabei handelt es sich um einen zweiten wendelförmigen Schneckensteg mit variabler Steigung. Der Barriereschneckensteg zweigt zum Anfang der Separationszone von dem Hauptschneckensteg ab, wobei in Längsrichtung der Extrusionsschnecke die Steigung zunächst größer ist, um einen Abstand zum Hauptschneckensteg zu bilden, der dann vorzugsweise im weiteren Verlauf zunächst konstant bleibt, bevor die Steigung wieder zunimmt, so dass sich der Barriereschneckensteg zum Ende der Separationszone wieder mit dem Hauptschneckensteg vereint.

Der Barriereschneckensteg unterteilt somit den Schneckenkanal in einen Feststoff- und einen Schmelzekanal. Diejenige Komponente des erwärmten Kunststoffverbundes, die die geringere Aufschmelztemperatur besitzt, wird über eine Temperierung des Extrudergehäuse und über dissipativen Wärmeeintrag durch Rotation der motorisch angetriebenen Extrusionsschnecke aufgeschmolzen, sodass der Anteil der aufgeschmolzenen Kunststoffpartikel, die aus dem niedriger schmelzenden Kunststoff bestehen, über den Barriereschneckensteg hinweg in den nachfolgenden Teil des Schmelzekanals strömen kann. Die Temperatur im Prozess wird dabei auf einem Niveau unterhalb der Aufschmelztemperatur der zweiten Komponente gehalten, ggf. auch durch Kühlung des Extrudergehäuses. Somit verbleibt diese Komponente als Feststoff in dem anderen Teil des Kanals, dem Feststoffkanal.

Durch die Verwendung einer Extrusionsschnecke mit der beschriebenen geometrischen Gestaltung ist es möglich, einen kontinuierlich betriebenen Prozess zu realisieren, welcher bereits ohne nachgeschaltete Siebtechnik eine nahezu vollständig von Fremdstoffanteilen separierte Schmelze zur Verfügung stellt. Dabei wird keine vorgeschaltete mechanische Trennung des Verbundes benötigt, wie es bei konventionellen Verfahren wie der Schwimm-Sink-Trennung oder dem IR-Verfahren der Fall ist. Auch wird im Gegensatz zum Trennschichtverfahren keine zusätzliche Schicht zwischen den zu trennenden Komponenten benötigt. Damit bietet die erfindungsgemäße Extrusionsvorrichtung die Möglichkeit, mechanisch hoch belastbare und/oder hochtemperaturbeständige Bauteile zu recyceln.

Mit Hilfe der Erfindung ist es möglich, Kunststoffverbunde in einem kontinuierlichen Prozess zu separieren. Dies macht das Verfahren im Vergleich zum aktuellen Stand der Technik deutlich effizienter, und die eingetragene Aufschmelzenergie kann direkt in Folgeprozessen zur Formgebung genutzt werden, sodass zeitgleich eine Kostenersparnis generiert wird. Der hauptsächliche Vorteil ist die Rezyklierbarkeit von Verbunden, welche mit gängigen Verfahren wie der Schwimm-Sink-Trennung nicht voneinander zu trennen sind. Zum einen können Abfälle bzw. Ausschussteile direkt beim Hersteller separiert und recycelt werden. Zum anderen können Recyclingunternehmen, die Anlagentechnik nutzen, um Abfälle zu separieren und als aufbereiteten Wertstoff dem Werkstoffkreislauf zurückzuführen.

Das mit der Extrusionsvorrichtung und dem Verfahren nach der Erfindung erhaltene Endprodukt umfasst mindestens eine Kunststoffkomponente, welche in nahezu reiner Form vorliegt und somit für die Weiterverarbeitung von hochwertigen Bauteilen eingesetzt werden kann.

Die Restanteile an festen Partikeln der höher schmelzenden Komponente, die nach der Separation in der Schmelze der niedriger schmelzenden Komponente enthalten sind, kann erfindungsgemäß auf bis zu 1% reduziert werden. Wegen des eher geringen Feststoffanteils wird diese abgetrennte Phase im Folgenden insgesamt als "Schmelze" bezeichnet.

Zugleich bleiben Anteile der niedriger schmelzenden Komponente an den Feststoffpartikeln der höher schmelzenden Komponente haften, so dass es sich genau genommen um einen Mischstoff handelt. Zur einfacheren sprachlichen Differenzierung wird darauf als "Feststoff" Bezug genommen.

Die Extrusionsvorrichtung der Erfindung gemäß Anspruch 1 ist zum einen durch eine modifizierte Extrusionsschnecke gekennzeichnet und zum anderen durch die Gestaltung des Endbereichs des Extrudergehäuses und der Schneckenspitze, um dort die flüssige Schmelze getrennt von der Mischstoff-Fraktion mit den verbliebenen Feststoffen ausschleusen zu können.

Die Extrusionsschnecke wird geometrisch so ausgelegt, dass sie einen kontinuierlichen Prozess ermöglicht, in welchem zwei oder mehr verbundene Materialien mit unterschiedlichen Aufschmelztemperaturen verarbeitet werden können. Die Geometrie der Schnecke wird mit einem Barriereschneckensteg versehen, welche den Schneckenkanal der Schnecke unterteilt. Im Prozess wird ein Betriebspunkt angesteuert, bei welchem die Komponente mit geringerem Aufschmelzpunkt in den schmelzeförmigen Zustand überführt wird. Der Barriereschneckensteg weist dabei eine geometrische Besonderheit auf, welche es der aufgeschmolzenen Komponente erlaubt, diese zu durch-, um- oder überströmen. Der Barriereschneckensteg sorgt somit dafür, dass die weiterhin feststoffförmige Komponente vor dem Barriereschneckensteg weitergefördert und somit von der Schmelze separiert wird. Eine weitere Besonderheit der Schnecke sind zwei unterschiedliche Öffnungen zum Austrag der überwiegend gemischten und der vorwiegend flüssigen Komponente. Das Ende des Barriereschneckenstegs ist geometrisch so gestaltet, dass zwei voneinander abgedichtete Leitungssysteme entstehen und die separierten Stoffströme ausgetragen werden können.

Um die separierten Stoffströme austragen zu können, ist ein Pinolenwerkzeug vorgesehen. Dieses dient zum einen dazu, die Schneckenwelle zu führen und einen versatzfreien Übergang eines Schmelzeaustragskanals der Schneckenwelle zu einem Schmelzeaustragskanal des Pinolenwerkzeugs zu schaffen. Damit kann die Schmelze der einen Fraktion im Zentrum ausgeschleust werden, während ein äußerer Ringkanal am Pinolenwerkzeug die Mischstofffraktion von höher schmelzenden Partikeln und Schmelze, die sich am Ende der Extrusionsschnecke aus dem Kanal löst, um 90° umzulenken und zu einer Außenseite des Extrudergehäuses oder eines daran angesetzten Pinolengehäuses auszuschleusen.

Vorzugsweise ist vorgesehen, dass die stirnseitige Kontaktfläche des Pinolenwerkzeugs und die Schneckenspitze eine konkav-konvexe Paarung bilden, so dass sich die rotierende Schneckenspitze formschlüssig an der feststehenden Kontaktfläche des Pinolenwerkzeugs zentriert. Insbesondere ist die Schneckenspitze in üblicher Weise konvex ausgebildet, vorzugsweise kegelabschnittsförmig, und die Kontaktfläche des Pinolenwerkzeugs konkav, vorzugsweise kegeltrichterförmig.

Es kann vorgesehen sein, dass die Kontaktfläche des Pinolenwerkzeugs zur dichtenden Anlage an die Schneckenspitze vorgesehen ist, gerade bei niedrig viskosen Kunststoffen der entsprechenden Fraktion.

Der nach der Erfindung innerhalb des Gangs des Hauptschneckenstegs vorgesehene Barriereschneckensteg erstreckt sich vorzugsweise nur über einen Längenbereich, der weniger als die Hälfte der Länge des mit dem Hauptschneckensteg versehenen Teils der Extrusionsschnecke erstreckt. In einem Anfangsbereich ist nur der Hauptschneckensteg wirksam, so dass dort die Plastifizierung der niedrig schmelzenden Komponente erfolgen kann. Dann beginnt in einem mittleren Längenbereich der Extrusionsschnecke eine Separationszone. Am Anfang der Separationszone spaltet sich der Barriereschneckensteg vom Hauptschneckensteg ab. Er besitzt in diesem Anfangsbereich zunächst eine größere Steigung, um sich vom Hauptschneckensteg zu lösen. Er läuft dann über den größten Teil der Separationszone mit geringerer Steigung parallel zum Hauptschneckensteg.

Durch den Barriereschneckensteg wird der wendelförmige Kanal innerhalb des Hauptschneckenstegs in einen Schmelzekanal und einen Feststoffkanal zweigeteilt. In einer Seitenansicht der Extrusionsschnecke gesehen, liegt der Feststoffkanal in Fließrichtung vorn, während in Fließrichtung dahinter der Schmelzekanal verläuft; die Trennung wird durch die Barriereschnecke bewirkt. Die Feststoffpartikel werden darin zurückgehalten, während die niedrig schmelzende Komponente den Barriereschneckensteg überströmt und in den Schmelzekanal gelangt.

Zum Ende der Separationszone hin nimmt die Steigung des Barriereschneckenstegs im Vergleich zur Steigung des Hauptschneckenstegs ab, so dass der Barriereschneckensteg auf den Hauptschneckensteg zuläuft und sich damit vereinigt. Kurz vor der Vereinigungsstelle ist eine Eintrittsöffnung für den Schmelzeaustragskanal in der Schneckenwelle ausgebildet.

Eine bevorzugte Ausführungsform sieht vor, dass der Schmelzeaustragskanal in der Schneckenwelle über wenigstens eine radiale Verbindungsbohrung mit dem Schmelzekanal am Außenumfang der Schneckenwelle verbunden ist. Eine solche radiale Verbindungsbohrung ist besonders einfach zu fertigen.

Am Außenumfang der Schneckenwelle kann auch eine trichterförmige Schlitzöffnung vorgesehen sein, die sich über einen Teil des Umfangs des Schmelzekanals am Ende der Separationszone erstreckt. Hierbei wird die Rotationsbewegung der Extrusionsschnecke ausgenutzt, um Schmelze einzuziehen und in den innenliegenden Schmelzeaustragskanal zu drücken.

Der Außendurchmesser des Barriereschneckenstegs sollte insbesondere dem 0,9fachen bis weniger als das 1,0fache des Außendurchmessers des Hauptschneckenstegs entsprechen. Dies ermöglicht das Überströmen des Barriereschneckenstegs durch die aufgeschmolzenen Anteile; der Spalt wird so eingestellt, dass die meisten unaufgeschmolzenen Partikel am Barriereschneckensteg zurückgehalten werden.

Um die Druckverhältnisse in der Extrusionsvorrichtung zu optimieren, ist vorzugsweise vorgesehen, dass die Höhe des Schmelzekanals und/oder des Feststoffkanals in der Separationszone in einer zur Schneckenspitze weisenden Förderrichtung variiert. Damit wird dem Umstand Rechnung getragen, dass einerseits das Fördervolumen in der Hauptschnecke durch die Barriereschnecke zweigeteilt ist, also geringer ist als außerhalb der Separationszone. Andererseits ist das Volumen der flüssigen Komponente anfangs noch gering, diese separiert sich aber immer mehr von der festen Komponente, so dass das Volumen im Schneckengang zunehmen muss, um die Schmelze aufzunehmen. Zugleich nimmt das Volumen im Feststoffkanal mit dem Abströmen der niedrig schmelzenden Komponente immer weiter ab. Daher sollte die Höhe des Feststoffkanals in Fließrichtung abnehmen.

Vorzugsweise nimmt die Höhe des Schmelzekanals zum Ende der Separationszone zu. Damit wird trägt dem Umstand Rechnung, dass im Verlauf der Separationszone mehr und mehr Schmelze, die ursprünglich in dem eingängigen Kanal in der Hauptschnecke gefördert ist, über den Barrieresteg in den Schmelzekanal übertritt. Ein volumetrischer Ausgleich sollte durch Änderung der Gangtiefe, also der Höhe des Schmelzekanals bewirkt werden. Dies ist gegenüber einer theoretisch ebenfalls denkbaren Vebreiterung des Schmelzekanals zu bevorzugen, da eine Verbreiterung nur durch eine lokale Änderung der Steigung herstellbar ist, was aber bei konstanter Drehzahl der Extrusionsschnecke zu unterschiedlichen Strömungsgeschwindigkeiten und Verweilzeiten führt.

Es kann vorgesehen sein, dass die Höhe des Feststoffkanals nach dem Ende der Separationszone noch einmal abnimmt, um den Füllgrad in diesem Abschnitt zu erhöhen und damit das Ausfördern der Mischstoff-Fraktion aus der Extrusionsvorrichtung zu verbessern.

Das Ausschleusen des Feststoffs erfolgt nach einer bevorzugten Ausführungsform derart, dass zwischen dem Pinolenwerkzeug und dem Extrudergehäuse ein Ringkanal ausgebildet ist, der über einen Austragskanal mit der Außenseite des Extrudergehäuses verbunden ist.

Eine einfach zu fertigende und zugleich effektive Form des Schmelzeaustragskanals wird dadurch gebildet, dass die Austrittsöffnung des Schmelzeaustragskanals der Extruderschnecke zentrisch an der Schneckenspitze angeordnet ist und eine Eintrittsöffnung des Schmelzeaustragskanals zentrisch am Pinolenwerkzeug angeordnet ist. Insbesondere sind die Schmelzeaustragskanäle in Schneckenwelle und Pinolenwerkzeug jeweils durch eine Kernbohrung entlang der Mittelachse gebildet. Diese Kernbohrungen fluchten, zumal nach einer bevorzugten Ausführungsform durch eine konkav-konvexe Paarung zwischen Schneckenwelle und Pinolenwerkzeug eine zuverlässige Zentrierung erreicht wird.

Eine alternative Ausbildung der Schneckenwelle sieht vor, dass der Schmelzeaustragskanal in einem in das Pinolenwerkzeug hinein oder durch das Pinolenwerkzeug hindurchführenden Rohrfortsatz ausläuft. Dieser Rohrfortsatz wird in einer Bohrung des Pinolenwerkzeugs geführt, so dass sich ein Gleitlager ausgebildet, wobei die Schmelze der niedrig schmelzenden Komponente als Schmiermittel wirkt.

Zur Erhöhung der Effizienz des Schmelzeaustrags sieht eine weitere bevorzugte Ausbildung der Erfindung vor, dass in dem Pinolenwerkzeug eine Förderschnecke angeordnet ist, die in den Schmelzeaustragskanal der Schneckenwelle und/oder den Schmelzeaustragskanal des Pinolenwerkzeugs hineinwirkt. Diese Förderschnecke kann drehangetrieben sein, so dass eine Anpassung an verschiedene Prozessbedingungen über eine Drehzahlregulierung möglich ist.

Sie kann aber, sofern sie axial bis in den Schmelzeaustragskanal der Extrusionsschnecke hineinreicht, auch feststehend im Pinolenwerkzeug oder in Extrusionsrichtung dahinter angeordnet sein und an ihrem Schneckensteg eine zur Rotationsrichtung der Extrusionsschnecke gegenläufige Orientierung haben. Dadurch wird der Schmelzeaustrag erhöht, da er dann auch mechanisch erzwungen wird und nicht nur durch Staudruck im Schmelzekanal der Extrusionsschnecke erfolgt.

Ein Verfahren zum Trennen eines Kunststoffverbunds mit wenigstens zwei unterschiedlich aufschmelzenden thermoplastischen Kunststoffen sieht die Verwendung der vorstehend beschriebenen Extrusionsvorrichtung vor. Die Aufbereitung eines in Partikelform vorliegenden Kunststoffverbunds erfolgt damit in folgender Weise:
Durch eine Einzugsöffnung im Extrudergehäuse wird der vorzerkleinerte Kunststoffverbund eingezogen und in dem durch den Hauptschneckensteg gebildeten Kanal gefördert. Dabei wird das Extrudergehäuse extern temperiert. Durch den motorischen Antrieb wird der Feststoff zudem durch dissipative Antriebsenergie infolge der Scherung erwärmt. Mit zunehmendem Weg entlang des Kanals auf der Extrusionsschnecke erwärmen sich die Partikel so weit, dass die Schmelztemperatur der niedrig schmelzenden Komponente des Verbunds ungefähr dort erreicht wird, wo die durch den Aufbau der erfindungsgemäßen Schnecke vorgegebene Separationszone beginnt. Während alle festen Anteile von niedrig und hoch schmelzender Komponenten an dem Barriereschneckensteg zurückgehalten werden, können die bereits vollständig plastifizierten Anteile der niedrig schmelzenden Komponente den Barriereschneckensteg über- oder durchströmen und gelangen in den Teil des Kanals dahinter, der als Schmelzekanal bezeichnet wird.

### Versuchsbeispiel:

Versuchsweise wurde statt zerkleinerter Verbundpartikel ein Gemisch aus 75 Masse-% (w.-%) Polystyrol, Typ Styrolution^{®} PS 124N, 25 w.-% weiß eingefärbtem PET, Typ Polyclear^{®} Refresh PET 1101, und 2 w.-% Titandioxid verarbeitet.

Die Mischung wurde bei 10 U/min auf einer erfindungsgemäß ausgebildeten Extrusionsschnecke mit Barriereschneckensteg verarbeitet. Um einen geringen Energieeintrag und damit ein Erweichen des PET zu vermeiden, wurde der Prozess ohne Gegendruck bzw. ohne Werkzeug gefahren und ein geringes Temperaturniveau für die Temperierung gewählt. Die Temperierung wurde dabei so eingestellt, dass am Ende der Separationszone, an der eine Schmelzeaustragsöffnung in der Extrusionsschnecke vorgesehen ist, eine Temperatur von 130 °C erreicht wird. Diese Temperatur lag somit zwischen der Erweichungstemperatur des PS von 89 °C und der des PET von 240 °C.

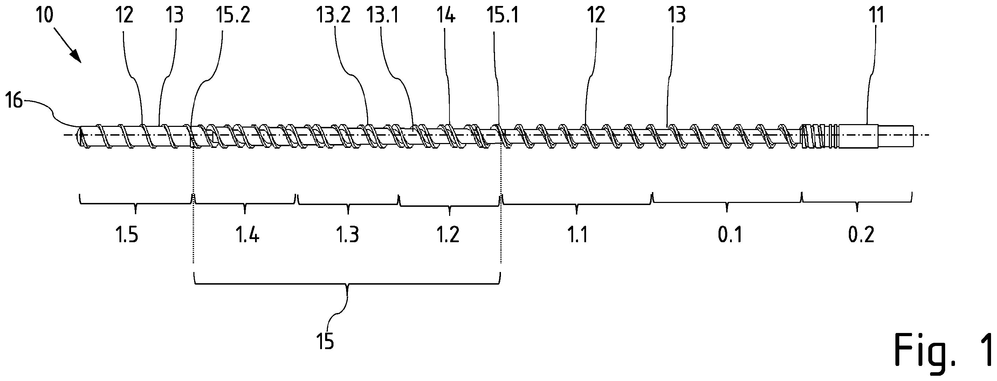

Das gesamte Temperaturprofil über die Länge der Extrusionsschnecke kann der Tabelle 1 entnommen werden; die Zylinderabschnitte sind in Figur 1 bezeichnet.

| | | | | | | |
|---|---|---|---|---|---|---|
| **Zylinderabschnitt** | 0.1 | 1.1 | 1.2 | 1.3 | 1.4 | 1.5 |
| **Temperatur [°C]** | 70 | 100 | 100 | 100 | 130 | 200 |

Die Zone 0.2 ist die Antriebszone, in der die Extrusionsschnecke 0.1 mit einem Getriebe verbunden ist und eine Abdichtung zu einem Gehäuse bewirkt. Die Zone 0.1 kennzeichnet die Einzugszone, an der die Feststoffpartikel durch eine Einzugsöffnung in die Extruderbohrung im Gehäuse und in den Schneckenkanal der Extrusionsschnecke gelangen, von wo aus sie in Längsrichtung der Extrusionsschnecke gefördert werden. Eine Temperaturzone 1.1 dient der Vorplastifzierung; hier besteht noch ein einzelner Kanal, der allein durch den Hauptschneckensteg gebildet ist. Hier wurde das PS vor Beginn der Separationszone in den schmelzeförmigen Zustand überführt, während die granulatförmige Feststoffstruktur des PET erhalten blieb.

Im Einlaufbereich der Separationszone, die sich über die Temperaturzone 1.2, 1.3 und 1.4 laut obenstehender Tabelle erstreckt, floss das PS über den Barriereschneckensteg und wurde dadurch von der PET-Komponente separiert. Aufgrund des hohen Schereintrags erreichen einzelne PET-Körner die Erweichungstemperatur und werden derartig deformiert, dass sie ebenfalls über den Barriereschneckensteg fließen. Der Anteil des PET im Schmelzekanal ist jedoch weitaus geringer als im Feststoffkanal. Die Bildung von weißen Schlieren war jedoch nicht zu beobachten, so dass nachgewiesen war, dass das PET nur erweicht, aber nicht in den schmelzeförmigen Zustand überführt worden war.

Zum Ende der Separationszone wurde deutlich, dass sich das PET im Feststoffkanal aufstaute. Dies führte zu einem hohen PET-Anteil im Feststoffkanal, welcher noch mit einer dünnen PS-Matrix umhüllt ist. Durch das Aufstauen wird außerdem das Übertreten des flüssigen PS in den hinter dem Barriereschneckensteg liegenden Schmelzekanal begünstigt.

Jenseits der Separationszone war eine weitere Temperaturzone 1.5 ausgebildet, in welcher der in dem Kanal geförderte Kunststoff auf eine Temperatur erwärmt wird, die niedriger ist als die Schmelztemperatur des höher schmelzenden Kunststoffs in dem verarbeiteten Kunststoffverbund, insbesondere um 5% bis 20% der Differenz der Aufschmelztemperaturen niedriger ist als die Schmelztemperatur des höher schmelzenden Kunststoffs. Dadurch wird die Viskosität der niedrig schmelzenden Komponente weiter herabgesetzt, ohne dass die Partikel der höher schmelzenden Komponente vollständig aufgeschmolzen werden. Die festen Anteile der höher schmelzenden Komponente werden dadurch aber so weit erweicht, dass sie ohne Blockaden gut abförderbar sind. Das gilt auch für einzelne Partikel, die ggf. mit in den Schmelzekanal übergetreten sind und mit der flüssigen Schmelze der niedrig schmelzenden Komponente zusammen ausgetragen werden.

Entsprechend konnte am Außenumfang am Ende der Schnecke festgestellt werden, dass die beiden Komponenten in zweiphasiger Form vorliegen und es somit nicht zum Mischen der Materialien kam. Beim Austritt der beiden Komponenten aus dem Extruder war ersichtlich, dass am Austritt der Schmelze die vereinzelt mitgerissenen PET-Granulatkörner in deformierter Form erhalten blieben, aber nicht mit dem PS vermischt waren. Durch nachgeschaltete mechanische Filterung der PET-Granulatkörner kann also eine reine PS-Schmelze erhalten werden.

Empirisch wurde ermittelt, dass die beste Separationsergebnisse erzielt werden, wenn die Geometrie der Extrusionsschnecke so an das zu separierende Kunststoffgemisch angepasst wird, dass das Verhältnis aus Druckdifferenz über den Barrieresteg und Volumenstrom über den Barrieresteg, gebildet aus dem Produkt der zwölf-fachen Materialviskosität der niedriger schmelzenden Komponente und der Stegbreite, dividiert durch das Produkt aus der Steglänge und der dritten Potenz der Spalthöhe, einen Wert im Bereich von 4,8·10⁵ bis 4,8·10¹⁵ Pa*s/m³ aufweist.

Die Erfindung wird nachfolgend mit Bezug auf das in den Zeichnungen dargestellte Ausführungsbeispiel näher erläutert. Die Figuren zeigen im Einzelnen:
- Fig. 1: eine Extrusionsschnecke nach der Erfindung in seitlicher Ansicht;
- Fig. 2: Teile der Extrusionsschnecke in perspektivischer Ansicht;
- Fig. 3: Teile der Extrusionsschnecke mit einem Pinolenwerkzeug, in perspektivischer Ansicht;
- Fig. 4: Teile der Extrusionsschnecke mit dem Pinolenwerkzeug, in perspektivischer Ansicht; und
- Fig. 5: einen Längsschnitt durch eine Extrusionsvorrichtung.

In Figur 1 ist eine nach der Erfindung ausgebildete Extrusionsschnecke 10 in seitlicher, schematischer Ansicht gezeigt. Über den Außenumfang einer Schneckenwelle 11, die den Kern bildet, erstreckt sich ein wendelförmiger Hauptschneckensteg 12. Innerhalb des wendelförmigen Hauptschneckenstegs 12 ist ein ebenfalls helixförmiger Kanal 13 zur Förderung des thermoplastischen Kunststoffs gebildet. Die Extrusionsschnecke 10 erstreckt sich von einer Antriebszone 0.2 ganz rechts in Figur 1 zu einer Schneckenspitze 16 links. Ein Kunststoffgemisch wird in einer Einzugszone 0.1 eingezogen und dann in Richtung der Schneckenspitze 16 gefördert.

In einer Separationszone 15, die sich zwischen einem Anfang 15.1 und einem Ende 15.2 über die Länge der Extrusionsschnecke 10 erstreckt, ist in den innerhalb des Hauptschneckenstegs 12 gebildeten Kanal 13 ein zusätzlicher Barriereschneckensteg 14 eingezogen, wodurch der ursprünglich eingängige Kanal 13 vorübergehend zweigängig wird und in einen Feststoffkanal 13.1 einerseits und einen im Vergleich dazu etwas schmaleren Schmelzekanal 13.2 andererseits unterteilt ist. Idealerweise hält der Barriereschneckensteg 14 alle Feststoffanteile im Feststoffkanal 13.1 zurück, während er allen Schmelzeanteilen das Überströmen in den dahinter liegenden Schmelzekanal 13.2 ermöglicht. Eingefügt ist also der Schmelzekanal 13.2, der nur durch Über- bzw. Durchströmen des Barriereschneckenstegs 14 zugänglich ist, während sich der ursprüngliche Kanal 13 in dem Feststoffkanal 13.1 fortsetzt. Die Separationszone 15 umfasst im dargestellten Beispiel die drei Zonen 1.2, 1.3 und 1.4 unterteilt, die unterschiedlich temperierbar sind, um ein Temperaturprofil definieren zu können.

Die beiden Schneckenstege 12, 14 auf der Schneckenwelle 11 sind mit zwei gleichsinnig geformten Korkenziehern vergleichbar, die über einen Teil ihrer Länge ineinandergesteckt sind. Dieser Überlappungsbereich von zwei Wendeln entspricht der Separationszone 15 bei der erfindungsgemäßen Extrusionsschnecke 10. Durch diesen Vergleich soll folgendes verdeutlicht werden:
- Der ursprüngliche Kanal 13, der seinen Ursprung in der Einzugszone 0.1 hat, setzt sich in der Separationszone 15 als Feststoffkanal 13.1 fort.
- Nach dem Ende der Separationszone 15 wird durch den Hauptschneckensteg 12 wieder der Kanal 13 in seiner ursprünglichen Form hergestellt. Dieser hat seinen Ursprung im Feststoffkanal 13.1.

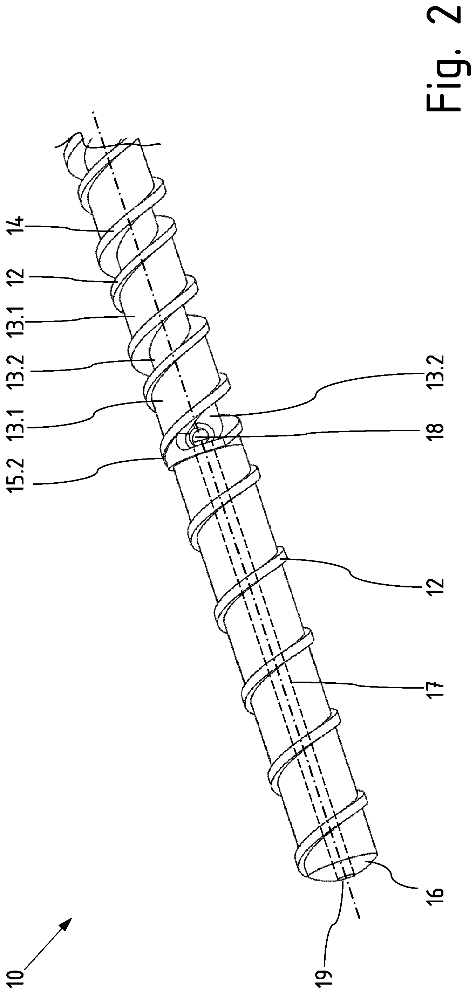

Figur 2 zeigt Teile der Extrusionsschnecke 10 in perspektivischer Ansicht mit Blick auf die Schneckenspitze 16. Anders als in der schematischen Figur 1 ist hier erkennbar, dass der Schmelzekanal 13.2 zum Ende 15.2 der Separationszone hin zunehmend schmaler wird und eine geringere Gangtiefe als der Feststoffkanal 13.1 hat. Am Ende 15.2 der Separationszone vereinigen sich der Hauptschneckensteg 12 und der Barriereschneckensteg 14, so dass ab dort wieder ein eingängiger, allein durch den Hauptschneckensteg 12 definierter Fließkanal 13 besteht. Vor dem Ende ist eine radiale Verbindungsbohrung eingebracht, die von einer Einzugsöffnung 18 außen zu einem innerhalb der Schneckenwelle 11 ausgebildeten Schmelzeaustragskanal 17 führt. Dieser endet an einer Mündung 19 an der Schneckenspitze 16.

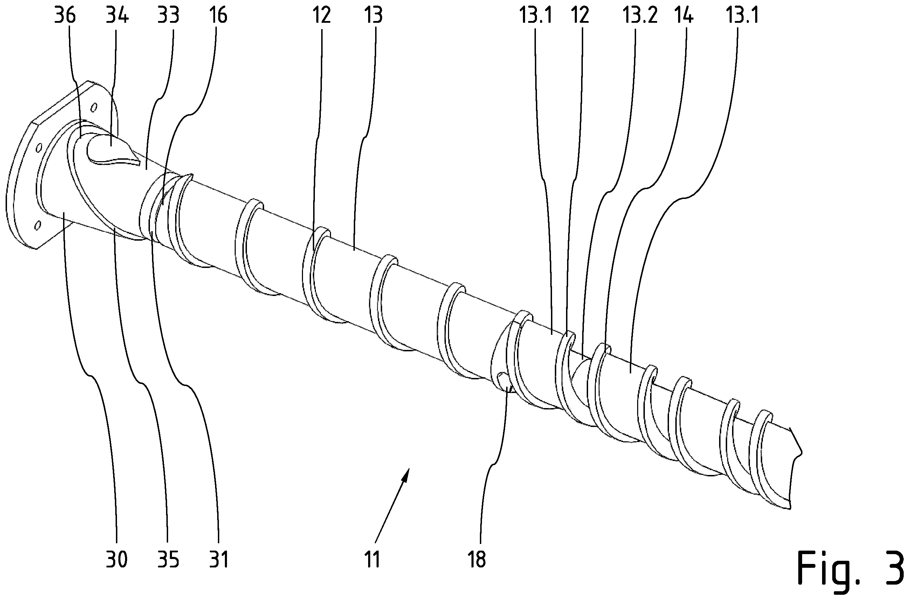

Figur 3 zeigt Teile der Extrusionsschnecke 10 aus einer anderen Perspektive. Vor der Schneckenspitze 16 der rotierenden Schneckenwelle 11 befindet sich eine Kontaktfläche 31 eines Pinolenwerkzeugs 30.

Durch das Pinolenwerkzeug 30 wird der im Kanal 13 am Außenumfang der Extrusionsschnecke 10 geförderte Mischstoffstrom aus Feststoffpartikeln der einen Komponente und Rest-Schmelzeanteilen der anderen Komponente so gelenkt und zusammengeführt, dass er um 90° in einen zweiten Austragskanal im Extrudergehäuse umgelenkt werden kann. Damit steht nach der bevorzugten Ausführungsform einer Extrusionsvorrichtung nach der Erfindung die Fließrichtung in Richtung der Längsachse der Schneckenwelle für den Schmelzeaustrag der niedrig schmelzenden Komponente zur Verfügung, während die davon separierten Feststoffe der anderen Komponente seitlich ausgeleitet werden. In einem endseitigen Ringkanal 33 am Pinolenwerkzeug 30 ist dazu eine Herzkurve 34 ausgebildet, um Teilströmungen des Mischstoffstroms hin zu einer Austrittszone 36 zu vereinigen. Eine schräge Begrenzungskante 35 trägt dazu bei, den Mischstoff nach oben, zur Austrittszone 36 hin, umzulenken.

Das Pinolenwerkzeug 30 wird benötigt, weil der sich von der rotierenden Extrusionsschnecke 10 ablösende Mischstoffstrom beim Übergang auf den feststehenden Ringkanal 33 zunächst noch weiter rotiert und zur Bildung einer homogenen Strömung, die zu der Austrittszone 36 hinführt, gezwungen werden muss.

Im dargestellten Beispiel ist die Kontaktfläche 31 konkav und die Schneckenspitze 16 konvex, wobei die Krümmungsradien unterschiedlich sind, so dass ein direkter Kontakt dazwischen, wenn überhaupt, nur im Zentrum besteht und sich von dort ausgehend ein zunehmend breiterer Spalt bildet. Wie nachfolgend noch gezeigt wird, besitzt das feststehende Pinolenwerkzeug 30 im Inneren einen Schmelzeaustragskanal, der mit dem Schmelzeaustragskanal in der rotierenden Schneckenwelle 11 fluchtet, so dass die durch den Schmelzeaustragskanal in der Schneckenwelle 11 geförderte Schmelze ausgetragen werden kann.

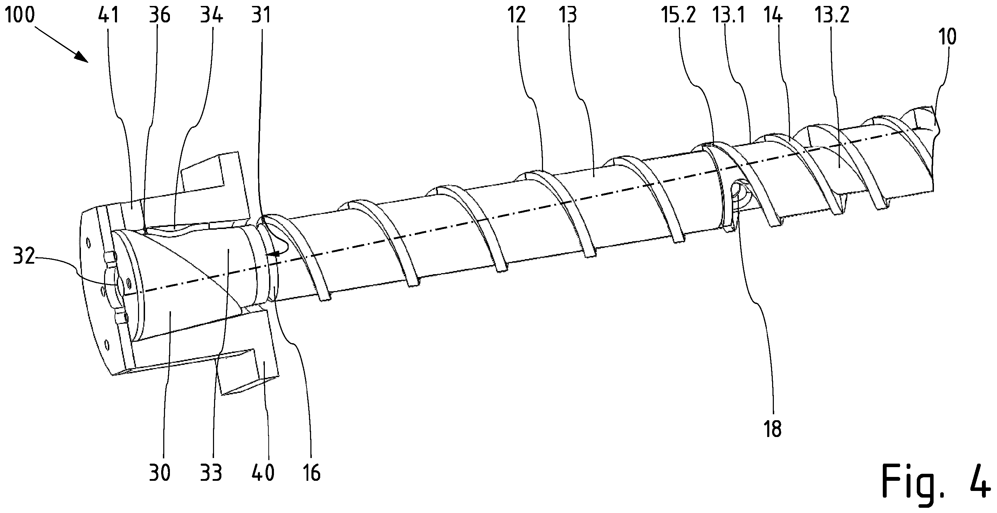

Figur 4 zeigt die Extrusionsschnecke 10, das Pinolenwerkzeug 30 und ein Pinolengehäuse 40 aus gleicher Perspektive wie in Figur 2. Hier wird insbesondere sichtbar, dass oberhalb der Austrittszone 36 am Pinolenwerkzeug 30 eine Austrittsöffnung 41 im Pinolengehäuse 40 ausgebildet ist, durch welche der Mischstoff ausgeleitet werden kann. Das Pinolengehäuse 40 ist über seinen Flansch mit dem hier nicht dargestellten übrigen Teil des Extrudergehäuses zu verbinden, in welchem die Extrusionsschnecke 10 gelagert ist. Der Schmelzeaustragskanal 32 für die niedrig schmelzende Komponente mündet vorne am Pinolenwerkzeug 30.

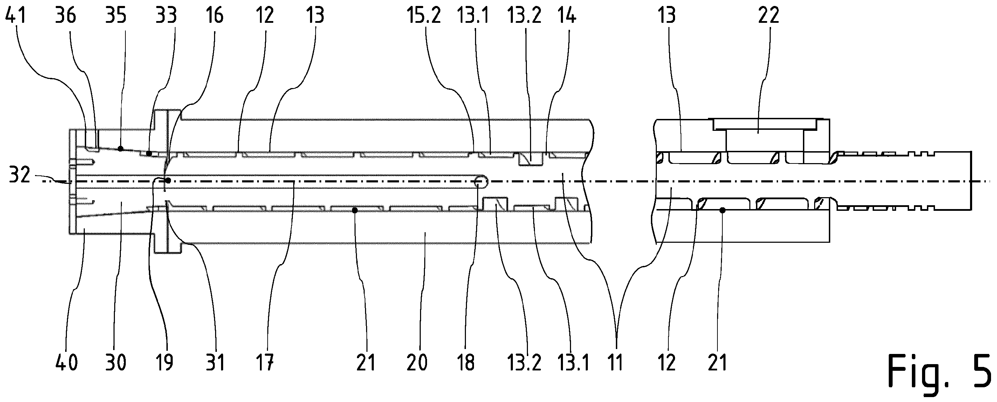

Figur 5 ist ein Längsschnitt der Extrusionsvorrichtung 100. Rechts befindet sich eine Einzugsöffnung 22 im Extrudergehäuse 20. In einer Gehäusebohrung 21 ist die Extrusionsschnecke 10 drehbar gelagert. Die Extruderschnecke 10 umfasst in diesem Bereich die Schneckenwelle 11 mit dem Hauptschneckensteg 12, durch welchen ein Kanal 13 gebildet ist.

Der links von der Unterbrechung gezeigte Abschnitt der Extrusionsvorrichtung 100 befindet sich bereits in der Separationszone. Hier laufen der Hauptschneckensteg 12 und der Barriereschneckensteg 14 annähernd parallel, wobei die Steigung des Barriereschneckenstegs 14 variiert, wie in Figur 1 sichtbar. Der Feststoffkanal 13.1 verjüngt sich in Fließrichtung zunehmend, so dass Schmelzeanteile des verarbeiteten Kunststoffpartikelgemisches aus dem Feststoffkanal 13.1 ausgepresst werden. Sie überströmen den Barriereschneckensteg 14 und gelangen in den Schmelzekanal 13.2. Am Ende 15.2 der Separationszone vereinigen sich die Schneckenstege 12, 14 wieder, wobei der ursprüngliche, eingängige Kanal13 innerhalb des Hauptschneckenstegs 12 wieder hergestellt wird.

Der Schmelzeaustragskanal 17 beginnt an einer Einzugsöffnung 18 am Umfang der Extruderschnecke, innerhalb des Schmelzekanals 13.2, und erstreckt sich von dort bis zu der Mündung 19 im Zentrum der Schneckenspitze 16. Diese liegt an einer Kontaktfläche 31 des Pinolenwerkzeugs 30 an. Der Schmelzeaustragskanal 32, der im Zentrum des Pinolenwerkzeugs 30 angeordnet ist, bildet die axiale Fortsetzung des Schmelzeaustragskanals 17 der Schneckenwelle 11. Am Außenumfang des Pinolenwerkzeugs 30 ist zwischen Pinole 30 und Pinolengehäuse 40 der ringförmige Ringkanal 33 ausgebildet.

Die Kontaktfläche 31 des Pinolenwerkzeugs 30 schließt sich nahtlos an das Ende der Extrusionsschnecke 10 an, so dass kein Versatz zum Außenumfang der Schneckenwelle 11 besteht und sich der zum Ende hin durch die schräge Begrenzungskante 35 abgeschlossene Ringkanal als Fortsetzung des Kanals 13 im Hauptschneckensteg 12 anschließt. Der Ringkanal 33 wiederum mündet bei der Austrittszone 36, der über den Austragskanal 41 aus dem Pinolengehäuse 40 herausführt.

### Bezugszeichen:

- 100: Extrusionsvorrichtung

- 0.2: Antriebszone
- 0.1: Einzugszone
- 1.1 - 1.5: Temperaturzonen

- 10: Extrusionsschnecke
- 11: Schneckenwelle
- 12: Hauptschneckensteg
- 13: Kanal
- 13.1: Feststoffkanal
- 13.2: Schmelzekanal
- 14: Barriereschneckensteg
- 15: Separationszone
- 15.1: Anfang der Separationszone
- 15.2: Ende der Separationszone
- 16: Schneckenspitze
- 17: Schmelzeaustragskanal
- 18: Einzugsöffnung
- 19: Mündung

- 20: Extrudergehäuse
- 21: Gehäusebohrung
- 22: Einzugsöffnung

- 30: Pinolenwerkzeug
- 31: Kontaktfläche
- 32: Feststoffaustragskanal
- 33: Ringkanal
- 34: Herzkurve
- 35: Begrenzungskante
- 36: Austrittszone

- 40: Pinolengehäuse
- 41: Austragskanal

## Patentansprüche

1. Extrusionsvorrichtung (100) zum Trennen eines Kunststoffverbunds mit wenigstens zwei unterschiedlich aufschmelzenden thermoplastischen Kunststoffen,
wenigstens umfassend ein Extrudergehäuse (20) mit einer Gehäusebohrung (21), die wenigstens eine Einzugsöffnung (22) aufweist und in der eine drehangetriebene Extrusionsschnecke (10) gelagert ist, die eine Schneckenwelle (11) aufweist, um deren Umfang sich wenigstens ein wendelförmiger Hauptschneckensteg (12) erstreckt, durch den wenigstens ein wendelförmiger Kanal (13) zur Förderung des thermoplastischen Kunststoffs gebildet ist, wobei
- die Schneckenwelle (11) in einer Separationszone (15) wenigstens einen von flüssiger Kunststoffschmelze durch- und/oder überströmbaren und Feststoffanteile des Kunststoffs zurückhaltender Barriereschneckensteg (14) besitzt, der sich über wenigstens einen Teil der Länge des Hauptschneckenstegs (12) erstreckt und mit gleicher Orientierung zu diesem innerhalb des Kanals (13) verläuft und diesen in einen Feststoffkanal (13.1) und einen Schmelzekanal (13.2) unterteilt
- die Schneckenwelle (11) einen mit dem Schmelzekanal (13.2) verbundenen Schmelzeaustragskanal (17) aufweist, der sich von wenigstens einer Einzugsöffnung (18) in der Separationszone (15) bis zu einer Mündung (19) im Zentrum einer Schneckenspitze (16) erstreckt, und
- im Extrudergehäuse (20) eine mit dem Schmelzeaustragskanal (17) in Fließverbindung stehende Ausschleusöffnung (41) vorgesehen ist,
**dadurch gekennzeichnet,**
- **dass** im Extrudergehäuse (20) ein feststehendes Pinolenwerkzeug (30) vorgesehen ist, das einen zur Schneckenspitze (16) führenden Schmelzeaustragskanal (32) aufweist, der mit dem Schmelzeaustragskanal (17) der Schneckenwelle (11) fluchtet und
- **dass** zwischen dem Pinolenwerkzeug (30) und einem Pinolengehäuse (40) ein Ringkanal (33) ausgebildet ist, der über einen Austragskanal (41) mit der Außenseite des Pinolengehäuse (40) verbunden ist.

2. Extrusionsvorrichtung (100) nach Anspruch 1, **dadurch gekennzeichnet, dass** am Außenumfang der Schneckenwelle (11) eine trichterförmige Schlitzöffnung vorgesehen ist, die mit dem Schmelzeaustragskanal (17) in Verbindung steht.

3. Extrusionsvorrichtung (100) nach Anspruch 1 oder 2, **dadurch gekennzeichnet, dass** das Pinolenwerkzeug (30) eine zur Anlage an die Schneckenspitze (16) ausgebildete Kontaktfläche (31) und einen zur Schneckenspitze (16) führenden Schmelzeaustragskanal (32) aufweist, der mit dem Schmelzeaustragskanal (17) der Schneckenwelle (11) fluchtet.

4. Extrusionsvorrichtung (100) nach Anspruch 3, **dadurch gekennzeichnet, dass** die Kontaktfläche (31) des Pinolenwerkzeugs (30) und die Schneckenspitze (16) eine konkav-konvexe Paarung bilden.

5. Extrusionsvorrichtung (100) nach Anspruch 3, **dadurch gekennzeichnet, dass** die Kontaktfläche (31) des Pinolenwerkzeugs (30) konkav und die Schneckenspitze (16) konvex ist.

6. Extrusionsvorrichtung (100) nach Anspruch 4 oder 5, **dadurch gekennzeichnet, dass** die Kontaktfläche (31) des Pinolenwerkzeugs (30) kegeltrichterförmig ausgebildet ist und die Schneckenspitze (16) kegelabschnittsförmig ausgebildet ist.

7. Extrusionsvorrichtung (100) nach einem der vorhergehenden Ansprüche, **dadurch gekennzeichnet, dass** die Separationszone (15) in einem mittleren Längenbereich der Extrusionsschnecke (10) beginnt, indem ein von dem Hauptschneckensteg (12) ausgehender Anfang des Barriereschneckenstegs (14) mit Abstand zu dem Hauptschneckensteg (12) in dem Kanal (13) geführt ist und die Separationszone (15) mit Abstand zur Schneckenspitze (16) endet, indem das vordere Ende des Barriereschneckenstegs (14) an den Hauptschneckensteg (12) herangeführt ist.

8. Extrusionsvorrichtung (100) nach einem der vorhergehenden Ansprüche, **dadurch gekennzeichnet, dass** die Höhe des Feststoffkanals (13.1) in der Separationszone (15) in einer zur Schneckenspitze (16) weisenden Förderrichtung abnimmt.

9. Extrusionsvorrichtung (100) nach einem der vorhergehenden Ansprüche, **dadurch gekennzeichnet, dass** in der Separationszone (15) die Höhe des Schmelzekanals (13.2) in einer zur Schneckenspitze (16) weisenden Förderrichtung zunimmt.

10. Extrusionsvorrichtung (100) nach einem der vorhergehenden Ansprüche, **dadurch gekennzeichnet, dass** der Schmelzeaustragskanal (17) in einem in das Pinolenwerkzeug (30) hinein oder durch das Pinolenwerkzeug (30) hindurchführenden Rohrfortsatz ausläuft, welcher sich über die Schneckenspitze (16) hinaus erstreckt.

11. Extrusionsvorrichtung (100) nach einem der vorhergehenden Ansprüche, **dadurch gekennzeichnet, dass** in dem Pinolenwerkzeug (30) eine Förderschnecke angeordnet ist, die in den Schmelzeaustragskanal (17) der Schneckenwelle (11) und/oder in den Schmelzeaustragskanal (32) des Pinolenwerkzeugs (30) hineinwirkt.

12. Verfahren zum Trennen eines Kunststoffverbunds, mit wenigstens zwei unterschiedlich aufschmelzenden thermoplastischen Kunststoffen, mittels einer Extrusionsvorrichtung (100), wenigstens umfassend ein temperierbares Extrudergehäuse (20) mit einer Gehäusebohrung (21), die wenigstens eine Einzugsöffnung aufweist und in der eine drehangetriebene Extrusionsschnecke (10) gelagert ist, die eine Schneckenwelle (11) aufweist, um deren Umfang sich wenigstens ein wendelförmiger Hauptschneckensteg (12) erstreckt, durch den ein wendelförmiger Kanal (13) zur Förderung des thermoplastischen Kunststoffs gebildet ist,
mit wenigstens folgenden Schritten:
- Zerkleinern des Kunststoffverbundes zu festen Kunststoffpartikeln;
- Einziehen von festen Kunststoffpartikeln durch die Einzugsöffnung (22) im Extrudergehäuse (20) in die Gehäusebohrung (21) mittels der rotierenden Schneckenwelle (11);
- Fördern und Erwärmen der Kunststoffpartikel in dem durch wenigstens einen Hauptschneckensteg (12) an der Schneckenwelle (11) gebildeten Kanal (13);
**dadurch gekennzeichnet,**
- **dass** die Kunststoffpartikel durch externe Temperierung des Extrudergehäuses (20) und/oder durch Energieeintrag durch Scherung aufgrund der rotierenden Schneckenwelle (11) bis zum Erreichen eines Barriereschneckenstegs (14) auf eine Temperatur erwärmt werden, die höher ist als der Schmelzpunkt der niedrig aufschmelzenden Kunststoffpartikel in dem Kunststoffverbund und niedriger als der Schmelz- bzw. Erweichungspunkt der hoch aufschmelzenden Kunststoffpartikel ist;
- **dass** die Masse aus zu Kunststoffschmelze aufgeschmolzenen und nicht-aufgeschmolzenen Kunststoffpartikeln bis zum Barriereschneckensteg (14) gefördert wird, an welchem die nicht aufgeschmolzenen Kunststoffpartikel zurückgehalten werden;
- **dass** die Kunststoffschmelze über den Barriereschneckensteg (14) hinweg oder hindurch in einem Schmelzekanal (13.2) bis zu einer Einzugsöffnung (18) eines Schmelzeaustragskanals (17) innerhalb des Wellenkerns geführt wird und
- **dass** der im Kanal (13) bis jenseits der Einzugsöffnung (18) geförderte Strom aus nicht-aufgeschmolzenen Kunststoffpartikeln und Resten der Kunststoffschmelze über einen weiteren Austragskanal (41) zur Außenseite des Extrudergehäuse geführt wird.

13. Verfahren nach Anspruch 12, **dadurch gekennzeichnet, dass** die Kunststoffpartikel in wenigstens zwei getrennt temperierbaren Temperaturzonen (1.1, 1.2, 1.3, 1.4, 1.5) unterschiedlich erwärmt werden. und/oder dass in der Separationszone (15) wenigstens zwei unabhängig temperierbare Temperaturzonen (1.2, 1.3, 1.4) ausgebildet sind und die Temperatur zum Ende der Separationszone (15) ansteigt.

14. Verfahren nach Anspruch 12 oder 13, **dadurch gekennzeichnet, dass** jenseits der Separationszone (15) wenigstens eine weitere Temperaturzone (1.5) ausgebildet ist, in welcher der in dem Kanal (13) geförderte Kunststoff auf eine Temperatur erwärmt wird, die um 20% bis 10% höher ist als die Schmelztemperatur des höher schmelzenden Kunststoffs in dem verarbeiteten Kunststoffverbund
